Europäisches Patentamt

European Patent Office

Office européen des brevets

(11) Veröffentlichungsnummer: **0 236 803 B1**

# EUROPÄISCHE PATENTSCHRIFT

(45) Veröffentlichungstag der Patentschrift: **15.01.92**

(51) Int. Cl.⁵: **H04Q 3/545**, G06F 11/16

(21) Anmeldenummer: **87102240.6**

(22) Anmeldetag: **17.02.87**

(54) **Verfahren zum Betrieb einer fehlergesicherten hochverfügbaren Multiprozessor-Zentralsteuereinheit eines Vermittlungssystemes.**

(30) Priorität: **12.03.86 DE 3608261**
**28.07.86 DE 3625498**

(43) Veröffentlichungstag der Anmeldung:
**16.09.87 Patentblatt 87/38**

(45) Bekanntmachung des Hinweises auf die
Patenterteilung:
**15.01.92 Patentblatt 92/03**

(84) Benannte Vertragsstaaten:
**AT BE CH DE FR GB GR IT LI NL SE**

(56) Entgegenhaltungen:
**GB-A- 2 016 176**

**IEEE INTERNATIONAL CONFERENCE ON COMMUNICATIONS, 14. - 17. Mai 1984, Amsterdam, NL, Band 2, Seiten 558-561, IEEE/Elsevier Science Publishers B.V., NL; H.J. BEUSCHER et al.: "System recovery concepts in a distributed processing system"**

**TELCOM REPORT 7, 1984, Heft 2, März/April 1984, Seiten 93-98, Passau, DE; H. KNAPEK et al.: "Sicherungstechnik im Koordinationsprozessor SSP112D des Digitalvermittlungssystems EWSD"**

(73) Patentinhaber: **SIEMENS AKTIENGESELL-
SCHAFT
Wittelsbacherplatz 2
W-8000 München 2(DE)**

(72) Erfinder: **Bitzinger, Rudolf, Dipl.-Ing
Lechbruckerstrasse 11
W-8000 München 71(DE)**
Erfinder: **Engl, Walter, Dipl.-Ing
Am Kellerberg 4
W-8152 Feldkirchen(DE)**
Erfinder: **Humml, Siegfried
An der Freiheit 130
W-8122 Penzberg(DE)**
Erfinder: **Schreier, Klaus, Dipl.-Ing
Nonnenwaldstrasse 8a
W-8122 Penzberg(DE)**

**GTE AUTOMATIC ELECTRIC WORLD-WIDE COMMUNICATIONS JOURNAL, Band 20, Nr. 2, März/April 1982, Seiten 57-61, Northlake, US; P.W. BASSETT et al.: "GTD-5 EAX: Recovery and diagnostic aspects of a multiprocessor system"**

**THE 8th ANNUAL SYMPOSIUM ON COMPU-TER ARCHITECTURE, 12. - 14. Mai 1981, Minneapolis, US, Seiten 163-170, Institute of Electrical and Electronics Engineers, Inc., New York, US; G.W. GEITZ et al.: "BFS-realization of a fault-tolerant architecture"**

## Beschreibung

Die Erfindung betrifft eine Weiterentwicklung des im Oberbegriff des Patentanspruches 1 definierten speziellen Verfahrens, das für sich der europäischen Patentanmeldung EP-A-141 245 entspricht. Die dort beschriebene EDC-Code-Fehlersicherung eines Prozessorbaueinheitpaares eines Prozessors kann hierbei z.B. gemäß der europäischen Patentanmeldung EP-A-140 155 durchgeführt werden.

Eine solche Zentralsteuereinheit soll extrem fehlertolerant sein, d.h. auftretende Fehler sollen möglichst rasch erkannt und fehlerhafte sowie fehlerverdächtige Organe, z.B. Prozessoren, der Zentralsteuereinheit möglichst rasch eliminiert sein, bevor aus dem Fehler weitere Fehler entstehen, die den Betrieb des Vermittlungssystemes beeinträchtigen könnten. Daher sind bei dieser Zentralsteuereinheit normalerweise nicht nur die Prozessorbaueinheiten, sondern auch das Bussystem und die Speicherblöcke des zentralen Speichers gedoppelt und fehlergesichert mikrosynchron parallel betrieben, - abgesehen von einem evtl. tolerierten gewissen zeitlichen Schlupf zwischen diesen "mikrosynchron parallel" betriebenen Bestandteilen.

Außerdem muß eine solche Zentralsteuereinheit trotz der extrem hohen Fehlertoleranz auch noch eine extrem hohe Verfügbarkeit aufweisen, d.h. sie soll möglichst höchstens während weniger Sekunden oder Minuten pro Jahr - trotz ununterbrochenen Betriebes - irgendwelche gravierende Störungen aufweisen. Auch ein Fehler in einem der zentralen Prozessoren der Zentralsteuereinheit soll also möglichst nie einen mehr oder weniger umfangreichen Zusammenbruch des Vermittlungsbetriebes auslösen.

Die Aufgabe der Erfindung,
* die Zuverlässigkeit der zentralen Prozessoren der Zentralsteuereinheit weiter zu erhöhen,
* also vor allem eine hohe Fehlertoleranz, eine Selbstprüfung der Prozessoren und damit die Aufrechterhaltung der de facto ungestörten Verfügbarkeit zu gewährleisten,
* um letztendlich damit die Zuverlässigkeit des Vermittlungsbetriebes weiter zu erhöhen,
wird durch die im Patentanspruch 1 genannten Maßnahmen gelöst.

Bei einem bekannten Vermittlungssystem (GTE Automatic Electric World-wide Communications Journal, 3-4/82, Artikel von P. W. Assett et al.), bei dem in den einzelnen Funktionsbereichen Verwaltung, Vermittlung und Peripherie jeweils ein Standardprozessorkomplex mit gedoppelten Prozessoren vorhanden ist, wobei sich diese Prozessorkomplexe lediglich in der Kapazität des zugehörigen Speichers unterscheiden, führt die Abgabe eines Alarmsignals durch eine der dem Prozessorkomplex individuell zugeordneten Überwachungsschaltungen zunächst zum Versuch einer Fehlerdiagnose. Eine Abschaltung des betreffenden Prozessors erfolgt hier erst dann, wenn im Zuge einer solchen Fehlerdiagnose das Vorliegen eines Fehlers bzw. Andauern eines Fehlers sich bestätigt hat.

Entsprechende Verhältnisse liegen bei einem anderen bekannten Vermittlungssystem vor (IEEE ICC 84; Artikel von H. J. Beuscher et al.), bei dem die Prozessoren Bestandteil von bezüglich der Fehlerbehandlung voneinander unabhängigen Moduln sind.

Die Anwendung einer derartigen Fehlerbehandlung auf ein Multiprozessorsystem der im Oberbegriff des Patentanspruchs 1 angegebenen Art, bei dem also die einzelnen Prozessoren gleichartige Aufgaben zu erfüllen haben und sich demnach auch gegenseitig vertreten können, birgt die Gefahr der Ausbreitung eines Fehlers in sich, bevor eine Fehlerbeseitigung vorgenommen werden kann.

Durch die Erfindung wird also der zunächst - vielleicht nur wegen eines kurzen, einmaligen Fehlers - als besonders fehlerverdächtig eingestufte Prozessor vom Bussystem abgetrennt, worauf er sich selbst ohne Mithilfe von außen prüft.

Weiterbildungen der Erfindung gestatten ganz besonders elegante Betriebsvarianten des betreffenden Prozessors, wodurch die Fehlertoleranz und auch die Verfügbarkeit der Zentralsteuereinheit weiter verbessert werden kann : Wenn nämlich z.B. der betreffende Prozessor bei dieser Selbstprüfung keinen dauerhaften Fehler findet, kann er sich auch selber wieder mit dem Bussystem verbinden. Wenn er aber bei dieser Selbstprüfung einen dauerhaften Fehler findet, kann er von nun an vom Bussystem abgetrennt bleiben. Weil in redundanter Weise etliche solche, für sich selbständig arbeitsfähige, und hierbei stets auch zu gleichen Vermittlungsleistungen fähige Prozessoren gleichzeitig parallel an das Bussystem angeschlossen sind, können jederzeit ein oder mehrere andere, an das Bussystem angeschlossene Prozessoren die Aufgaben eines jeden abgetrennt bleibenden, fehlerhaften Prozessors voll mitübernehmen. Trotz der dauerhaften Abtrennung eines oder sogar mehrerer Prozessoren bleibt also die Zentralsteuereinheit im allgemeinen weiterhin noch in sehr hohem Maße verfügbar.

Durch die Erfindung werden also Ausbreitungen von in den Prozessoren auftretenden Fehlern auf den übrigen Betrieb der Zentralsteuereinheit und damit des ganzen Vermittlungssystems rasch und zuverlässig gestoppt. Damit ist also das Vermittlungssystem besonders fehlertolerant und besonders gut verfügbar, also besonders zuverlässig.

Die in den Unteransprüchen genannten zusätzlichen Maßnahmen gestatten, den Betrieb des betreffenden fehlerhaften oder fehlerverdächtigen Prozessors weiter zu verbessern. Es gestatten nämlich die Maßnahmen gemäß Patentanspruch

2, wenn es sich nur um einen sporadischen einmaligen Fehler handelte, mit einem Minimum von Aufwand, nämlich schlicht mittels eines im lokalen Speicher gespeicherten Kommandos, die volle alte extreme Verfügbarkeit der Zentralsteuereinheit wiederherzustellen,

3, den bei der Selbstprüfung mehr oder weniger detailliert lokalisierten bzw. typisierten defekten Teil des Prozessors später bei der nächsten Wartung gezielt zu reparieren, oder aber zumindest gewisse Indizien zur Lokalisierung zu bieten,

wodurch es unnötig wird, bei einer Reparatur stets ungezielt den gesamten betreffenden Prozessor austauschen zu müssen,

4, auf ein im allgemeinen dann unnötiges Weiterarbeiten des Fehlerdiagnose-Programmabschnittes zu verzichten, wobei die Stelle, an der dieser Programmabschnitt unterbrochen wurde, für sich bereits im Diagnoseregister(REG) protokolliert ist,

5, einen fehlerhaften Prozessor rechtzeitig zu eliminieren, so daß ihm, unter Vermeidung von Zeitverlusten, keine Vermittlungsaufträge mehr zugeteilt werden,

6, die Ferndiagnose des Defektes der Zentraleinheit zu erleichtern,

7, die alte, extrem hohe Verfügbarkeit der Zentralsteuereinheit auch bei einem Defekt in einer Prozessorbaueinheit praktisch nicht einzuschränken, sowie

8, sicherzustellen, daß der betreffende Notbetrieb bei einer der nächsten Wartung der Zentralsteuereinheit, schon vor einer Inspektion vor Ort, vorbereitet werden kann.

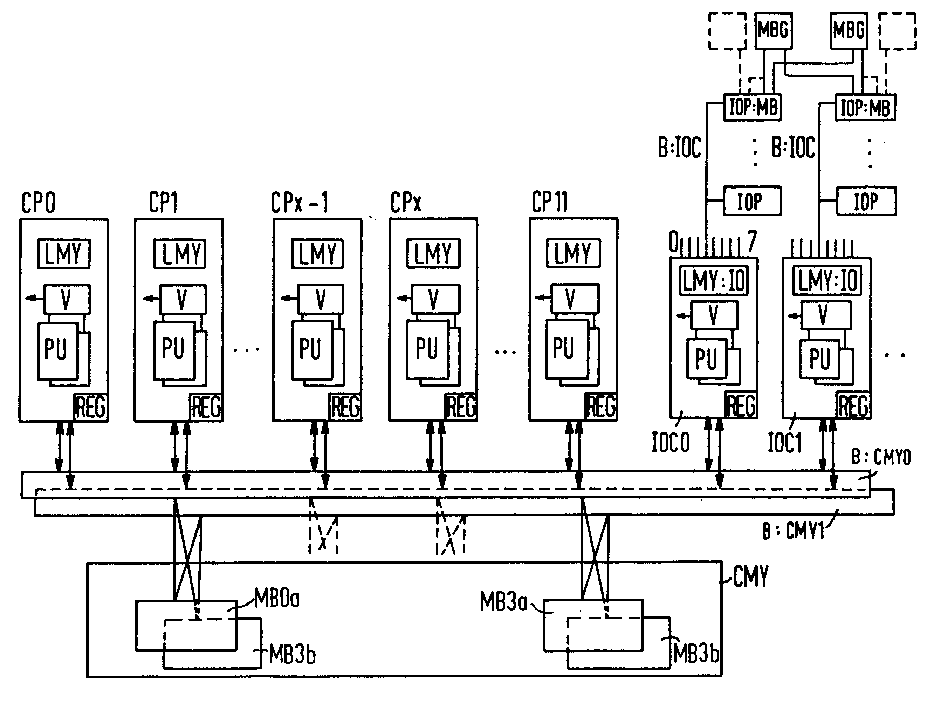

Die Erfindung, ihre Weiterbildungen und Vorteile werden anhand des in der Figur gezeigten Ausführungsbeispieles weiter erläutert.

Das in dieser Figur gezeigte Zentralsteuereinheit-Beispiel entspricht sehr weitgehend den in den Figuren und Beschreibungen der Patentanmeldungen EP-A-0 141 245, EP-A-0 135 931, usw., erläuterten Zentralsteuereinheit-Beispielen. In diesen anderen Patentanmeldungen sind jeweils nur andere Aspekte dieser verschiedenen Beispiele entsprechend der dort anderen Aufgabe bzw. Lösung betont. Die Erfindung ist auf alle diese älteren Beispiele anwendbar. Weil daher die wichtigsten allgemeinen Eigenschaften bereits in den älteren Patentanmeldungen ausführlich beschrieben sind, braucht hier der Aufbau und die Betriebsweise des in der der vorliegenden gezeigten Zerntralsteuereinheits-Beispiels nicht nochmals in allen Einzelheiten erläutert zu werden. Statt dessen genügt es, im folgenden nur noch auf Besonderheiten des erfindungsgemäßen Verfahrens einzugehen.

Die Figur zeigt also die zentralen Prozessoren CPO...CP11, IOCO, IOC1..., mit jeweils in sich gedoppelten Prozessorbaueinheiten PU, also z.B. mit in sich gedoppelten 32-Bit-Mikroprozessorchips PU. Diese Prozessorbaueinheiten PU werden jeweils mikrosynchron parallel betrieben und führen daher parallel die eigentlichen Verknüpfungen fehlergesichert durch, wozu sie jeweils zumindest eine einzige eigene Fehlererkennungsschaltung, z.B. EDC-Schaltungen, Paritybit-Netzwerke und/oder eine Vergleicherschaltung V, zur sofortigen Überprüfung der jeweils bearbeiteten Befehle und/oder Daten beider Prozessorbaueinheiten PU des betreffenden Prozessors enthalten oder zugeordnet erhielten. In ihrem eigenen lokalen Speicher LMY bzw. LMY:IO mit einem RAM-Teil und einem ROM-Teil, also z.B. PROM-Teil, speichern die Prozessoren CP, IOC, vergleicht man sie untereinander, jeweils zumindest teilweise ähnliche Fehlerdiagnoseprogramme bzw. TESTprogramme für die eigene Überprüfung, sowie evtl. weitere Vermittlungsprogrammeabschnitte, z.B. die von diesem Prozessor CP, IOC jeweils am häufigsten und/oder am schnellsten benötigten sonstigen Vermittlungs-Programmabschnitte.

Der zentraler Speicher CMY, zu welchem die zentralen Prozessoren CP, IOC über das Bussystem B:CMYO/B:CMY1 Zugriff haben, speichern zumindest verschiedene, seltener und/oder jeweils nicht sofort von einem zentralen Prozessor CP, IOC benötigte Vermittlungs-Programmabschnitte, sowie - zumindest vorübergehend - für mehrere oder für alle Prozessoren CP, IOC zugängliche Daten über eine Vielzahl von derzeitigen Verbindungen und über periphere Systemorgane.

Sobald durch zumindest eine der Fehlererkennungsschaltungen, z.B. durch eine der Prozessor-Vergleicherschaltungen in dem betreffenden Prozessor, z.B. CPx, ein Fehler festgestellt wurde - zumindest wenn er nicht ohne weiteres korrigierbar ist -, veranlaßt zunächst das dieser Störung entsprechende Ausgangssignal der betreffenden Fehlererkennungsschaltung unmittelbar oder mittelbar sowohl die Abtrennung des betreffenden Prozessors CPx vom Bussystem B:CMYO/B:CMY1 mittels Trennschaltern, bzw. mittels einer, solchen Trennschaltern entsprechenden I/O-Baueinheit, als auch den Start des Lesens des für eine solche Störung im eigenen ROM-Teil des lokalen Speichers LMY (bzw. LMY:IO) gespeicherten Fehlerdiagnose-Programmabschnittes. Danach beginnen die beiden Prozessorbaueinheiten PU dieses Prozessors CPx das Abarbeiten dieses Fehlerdiagnose-Programmabschnittes zur genaueren Lokalisierung und/oder Typisierung des betreffenden Fehlers. Durch die Abtrennung des betreffenden Prozessors CPx wird die Ausbreitung des Fehlers über das ganze Vermittlungssystem hinweg verhindert, also eine hohe Fehlertoleranz erreicht Die sofort eingeleitete Selbstprüfung erleichtert die spätere Fehlerdiagnose und die dann evtl. fällig werdende Reparatur ist sehr gezielt, im allgemeinen auf eine kleine Untereinheit des betreffenden Prozessors beschränkt, möglich. Falls während des Abarbeitens kein Hinweis auf einen Fehler festgestellt wird, verbindet sich der betreffende Prozessor CPx bevorzugterweise selbst wieder mit dem Bussystem B:CMYO/B:CMY1, so daß danach die alte, extrem hohe Verfügbarkeit sofort wiederhergestellt ist.

Die Diagnose des fehlerhaften Prozessors ist auch später noch besonders rasch und leicht möglich, wenn, falls während des Abarbeitens ein Hinweis auf einen Fehler festgestellt wird, ein diesem Fehler entsprechender Fehlercode, z.B. die Adresse des betreffenden Fehlerdiagnose-Programmabschnitt-Kommandos, in einem eigenen Diagnoseregister REG des betreffenden Prozessors CPx gespeichert wird.

Wenn ein Fehler genügend genau lokalisiert bzw. typisiert ist, dann kann man sogar sofort nach dem Einspeichern des Fehlercode die Abarbeitung des Diagnose-Programmabschnittes unterbrechen.

Wenn man den fehlerhaften Prozessor CPx einfach vom Bussystem B:CMY abgetrennt läßt, kann man ihn beim Verteilen von Vermittlungsaufträgen sofort überspringen, so daß die Abtrennung keinen Zeitverlust bewirkt, wodurch der Einfluß der Abtrennung auf die Verfügbarkeit der Zentralsteuereinheit sehr begrenzt bleibt.

Eine Ferndiagnose aller Fehler, und eine entsprechend gute Vorbereitung auf die nächste Wartung der Zentralsteuereinheit ist mittels z.B. eines Spezial-Prozessors einer Operation & Maintenance-Station über das Bussystem B:CMYO/B:CMYl möglich, indem man über diese Station mittels eines nur ihm verfügbaren Sondercode Zugang zu jedem vom Bussystem B:CMYO/B:CMYO abgetrennten Prozessor CPx, z.B. zum Abfragen des Inhaltes seines Diagnoseregisters REG, hat.

Wenn durch eine unmittelbar einer der beiden Prozessorbaueinheiten PU zugeordneten Fehlererkennungsschaltung, z.B. einer ihr zugeordneten EDC-Schaltung oder einem ihr zugeordneten Paritybit-Netzwerk, nur ein Hinweis auf die Fehlerhaftigkeit eines der beiden Prozessorbaueinheiten PU festgestellt wird, kann diese betreffende Prozessorbaueinheit PU alleine abgeschaltet und der normale Prozessorbetrieb alleine durch die andere Prozessorbaueinheit PU dieses Prozessors aufrechterhalten werden, was die Verfügbarkeit der Zentralsteuereinheit auf den vorherigen hohen Stand läßt. Auch hierbei ist es günstig, während der alleinigen Abschaltung der einen Prozessorbaueinheit PU einen Hinweis auf diese Abschaltung für den Wartungsdienst zu protokollieren, z.B. wieder im Diagnoseregister REG, das seinerseits ja sogar von der Ferne über eine Operation & Maintenance-Station abgefragt werden kann. Dann kann bereits bei der Vorbereitung der nächsten Wartung die Reparatur auch dieses Prozessors eingeplant werden.

## Patentansprüche

1. Verfahren zum Betrieb einer fehlergesicherten hochverfügbaren Multiprozessor-Zentralsteuereinheit eines Vermittlungssystems, insbesondere eines Fernsprech-Vermittlungssystems, bei welcher

 * mehrere zentrale Prozessoren(CP, IOC),
  - welche jeweils gedoppelte, - abgesehen von einem evtl. tolerierten gewissen Schlupf - mikrosynchron parallel betriebene, die eigentlichen Verknüpfungen fehlergesichert durchführende Prozessorbaueinheiten(PU) enthalten,
  - welche zur Fehlersicherung jeweils eigene Fehlererkennungsschaltungen, z.B.
   # EDC-Schaltungen,
   # Paritybit-Netzwerke und/oder
   # eine Vergleicherschaltung(V),
   zur sofortigen Überprüfung der jeweils bearbeiteten Befehle und/oder Daten beider Prozessorbaueinheiten (PU) des betreffenden Prozessors enthalten, und
  - welche einen eigenen lokalen Speicher(LMY, LMY:IO) mit einem RAM-Teil und einem ROM-Teil, also z.B. PROM-Teil, aufweisen, wobei dieser ROM-Teil seinerseits, vergleicht man die verschiedenen Prozessoren-(CP, IOC),
   # jeweils zumindest teilweise untereinander ähnliche Teilprogramme für die eigene Überprüfung des betreffenden Prozessors(CP, IOC), sowie
   # weitere Vermittlungs-Teilprogramme, z.B. die von diesem Prozessor-(CP, IOC) jeweils am häufigsten und/oder am schnellsten benötigten Vermittlungs-Programmabschnitte,
   speichert,
 * sowie ein zentraler Speicher(CMY),
  - zu welchem die zentralen Prozessoren(CP, IOC) über das Bussystem(B:CMY, OB:CMY1) Zugriff haben, und

- welcher verschiedene, seltener und/oder jeweils nicht sofort von einem zentralen Prozessor(CP, IOC) benötigte Vermittlungs-Programmabschnitte, sowie - zumindest vorübergehend gespeicherte - für mehrere oder für alle Prozessoren(CP, IOC) zugängliche Daten über eine Vielzahl von derzeitigen Verbindungen und über periphere Systemorgane speichert,

parallel an ein zentrales Bussystem(B:CMY0/B:CMY1) angeschlossen sind, **dadurch gekennzeichnet, daß** nach einem durch zumindest eine der Fehlererkennungsschaltungen(V) eines Prozessors(z.B. CPx) in dem betreffenden Prozessor(CPx) festgestellten Fehler - zumindest wenn er nicht ohne weiteres korrigierbar ist -,

* zunächst das dieser Störung entsprechende Ausgangssignal der betreffenden Fehlererkennungsschaltung(V in CPx) unmittelbar oder mittelbar
  - sowohl die Abtrennung des betreffenden Prozessors(CPx) vom Bussystem(B:CMY0/B:CMY1) mittels Trennschaltern, bzw. mittels einer, solchen Trennschaltern entsprechenden I/O-Baueinheit,
  - als auch den Start des Lesens des für eine solche Störung im eigenen ROM-Teil des lokalen Speichers(LMY) gespeicherten Fehlerdiagnose-Programmabschnittes

  veranlaßt, und
* danach die beiden Prozessorbaueinheiten(PU) dieses abgetrennten Prozessors(CPx) das Abarbeiten dieses Fehlerdiagnose-Programmabschnittes zur Lokalisierung und/oder Typisierung des Fehlers beginnen.

2. Verfahren nach Patentanspruch 1, **dadurch gekennzeichnet, daß**
   * anschließend, falls während des Abarbeitens kein Hinweis auf einen Fehler festgestellt wird, der betreffende Prozessor(CPx) sich selbst wieder mit dem Bussystem (B:CMY0/B:CMY1) verbindet.

3. Verfahren nach Patentanspruch 1, **dadurch gekennzeichnet, daß**
   * anschließend, falls während des Abarbeitens ein Hinweis auf einen Fehler festgestellt wird, ein diesem Fehler entsprechender Fehlercode,
     - z.B. die Adresse des betreffenden Kommandos des Fehlerdiagnose-Programmabschnittes,

in einem eigenen Diagnoseregister(REG) des betreffenden Prozessors(CPx) eingespeichert wird.

4. Verfahren nach Patentanspruch 3, **dadurch gekennzeichnet, daß**
   * nach dem Einspeichern des Fehlercode, die Abarbeitung des Diagnose-Programmabschnittes unterbrochen wird.

5. Verfahren nach Patentanspruch 3 oder 4, **dadurch gekennzeichnet, daß**
   - danach der betreffende Prozessor(CPx) abgeschaltet bleibt.

6. Verfahren nach einem der Patentanspruch 2 bis 5, **dadurch gekennzeichnet, daß**
   * ein Spezial-Prozessor,
     - z.B. ein Spezial-Prozessor einer Operation & Maintenance-Station,
     über das Bussystem(B:CMY0/B:CMY1) mittels eines Sondercode Zugang zu jedem vom Bussystem(B:CMY0/B:CMY1) abgetrennten Prozessor(CPx), z.B. zum Abfragen des Inhaltes seines Diagnoseregisters(REG), hat.

7. Verfahren nach Patentanspruch 1, 3, 4 oder 6, **dadurch gekennzeichnet, daß**
   * wenn durch eine unmittelbar einer der beiden Prozessorbaueinheiten(PU) zugeordneten Fehlererkennungsschaltung,
     - z.B. durch eine EDC-Schaltung oder ein Paritybit-Netzwerk,
     nur ein Hinweis auf die Fehlerhaftigkeit eines der beiden Prozessorbaueinheiten(PU) festgestellt wird, die betreffende Prozessorbaueinheit(PU) alleine abgeschaltet wird und
   * der normale Prozessorbetrieb alleine durch die andere Prozessorbaueinheit(PU) dieses Prozessors aufrechterhalten wird.

8. Verfahren nach Patentanspruch 7, **dadurch gekennzeichnet, daß**
   * ein Hinweis auf diese Abschaltung der einen Prozessorbaueinheit(PU) für den Wartungsdienst, z.B. im Diagnoseregister(REG), protokolliert wird.

**Claims**

1. Method for operating a fault-protected and highly available multiprocessor central controller of a switching system, preferably of a telephone switching system, in which

* a plurality of central processors (CP, IOC),
  - which each contain dual processor units (PU) which are microsynchronously operated in parallel - apart from a certain slip which may be tolerated - and carry out the actual fault-protected interconnections,
  - which contain for fault protection in each case their own error detection circuits, for example
    # EDC circuits,
    # parity bit networks and/or
    # a comparator circuit (V),
    for the immediate checking of the instructions and/or data of both processor units (PU) of the respective processor being processed in each case, and
  - which have their own local memory (LMY, LMY:IO) with a RAM part and a ROM part, that is to say PROM part for example, this ROM part in turn storing, if one compares the different processors (CP, IOC),
    # in each case at least partially similar part programs for the self testing of the respective processor (CP, IOC), as well as
    # further part switching programs, for example the switching program sections required by this processor (CP, IOC) in each case the most frequently and/or the most quickly,
* as well as a central memory (CMY),
  - to which the central processors (CP, IOC) have access via the bus system (B:CMY, OB:CMY1), and
  - which store various switching program sections that are required more seldomly and/or in each case not immediately by a central processor (CP, IOC), as well as - at least temporarily stored - data on a large number of current connections and on peripheral system elements which are accessible to several or to all the processors (CP, IOC),

are connected in parallel to a central bus system (B:CMY0/B:CMY1), characterised in that, after an error detected by at least one of the error detection circuits (V) of a processor (for example CPx) in the respective processor (CPx), at least if it cannot be immediately corrected,

* first of all the output signal of the respective error detection circuit (V in CPx) corresponding to this fault directly or indirectly initiates
  - both the disconnection of the respective processor (CPx) from the bus system (B:CMY0/B:CMY1) by means of circuit breakers, or by means of an I/O unit corresponding to such circuit breakers,
  - and the starting of reading the error diagnostics program section stored in its own ROM part of the local memory (LMY) for such a fault,
  and
* following this the two processor units (PU) of this disconnected processor (CPx) begin processing this error diagnostics program section to locate and/or identify the error.

2. Method according to Patent Claim 1, characterised in that
* if no indication of an error is detected during the processing, the respective processor (CPx) subsequently reconnects itself to the bus system (B:CMY0/B:CMY1).

3. Method according to Patent Claim 1, characterised in that
* if an indication of an error is detected during the processing, an error code corresponding to this error,
  - for example the address of the respective command of the error diagnostics program section,
  is subsequently stored in the respective processor's (CPx) own diagnostic register (REG).

4. Method according to Patent Claim 3, characterised in that
* the processing of the diagnostics program section is interrupted after the error code has been stored.

5. Method according to Patent Claim 3 or 4, characterised in that
  - thereafter the respective processor (CPx) remains switched off.

6. Method according to one of Patent Claims 2 to 5, characterised in that
* a special processor,
  - for example a special processor of an operation and maintenance station,
  has access via the bus system (B:CMY0/B:CMY1) by means of a special code to each processor (CPx) disconnected from the bus system (B:CMY0/B:CMY1), for example for interrogating the contents of its diagnostic register (REG).

**7.** Method according to Patent Claim 1, 3, 4 or 6, characterised in that
* if only an indication of the faultiness of one of the two processor units (PU) is detected by an error detection circuit directly assigned to one of the two processor units (PU),
    - for example by an EDC circuit or a parity bit network,

  only the respective processor unit (PU) is switched off, and
* the normal processor operation is maintained solely by the other processor unit (PU) of this processor.

**8.** Method according to Patent Claim 7, characterised in that
* an indication of this disconnection of one processor unit (PU) is logged for the maintenance service, for example in the diagnostic register (REG).

**Revendications**

**1.** Procédé pour faire fonctionner une unité de commande centrale à multiprocesseur, présentant une grande disponibilité et protégée vis-à-vis d'erreurs, d'un système de commutation, notamment d'un système de commutation téléphonique, selon lequel
* plusieurs processeurs centraux (CP,IOC),
    - qui contiennent respectivement des modules de processeurs (PU) respectivement doublés, fonctionnant en parallèle d'une manière microsynchrone,
    - indépendamment d'un certain glissement éventuellement toléré, et exécutent les combinaisons proprement dites, d'une manière protégée contre les erreurs,
    - qui contiennent, pour la protection vis-à-vis d'erreurs, respectivement des circuits particuliers d'identification d'erreurs, par exemple
      # des circuits EDC,
      # des réseaux de bits de parité et/ou
      # un circuit comparateur (V),
      pour contrôler immédiatement les instructions respectivement traitées et/ou des données des deux modules (PU) du processeur considéré,
    - qui possèdent une mémoire propre locale (LMY,LMY:IO) comportant une partie RAM et une partie ROM, c'est-à-dire par exemple une partie PROM, cette partie ROM mémorisant pour sa part, si l'on compare les différents processeurs (CP,IOC),
      # respectivement des programmes partiels ou moins partiellement semblables pour le contrôle proprement dit du processeur considéré (CP,IOC), ainsi que
      # d'autres programmes partiels de commutation, par exemple les sections de programmes de commutation qui sont requis respectivement le plus fréquemment et/ou le plus rapidement par ce processeur (CP,IOC),
* ainsi qu'une mémoire centrale (CMY),
    - à laquelle ont accès les processeurs centraux (CP,IOC) par l'intermédiaire du système de bus (B:CMY, OB:CMY1), et
    - qui mémorise différentes sections de programmes de commutation, qui sont rares et/ou respectivement non requis immédiatement par un processeur central (CP,IOC), ainsi que des données -mémorisées au moins temporairement- accessibles pour plusieurs processeurs ou pour tous les processeurs (CP,IOC), par l'intermédiaire d'une multiplicité de liaisons présentes ou par l'intermédiaire d'éléments périphériques du système,

  sont raccordés en parallèle à un système de bus central (B:CMY0/B:CMY1), caractérisé par le fait qu'après une erreur déterminée par au moins l'un des circuits (V) d'identification d'erreurs d'un processeur (par exemple CPx) dans le processeur considéré (CPx) -au moins lorsque cette erreur ne peut pas être corrigée-,
* tout d'abord le signal de sortie, qui correspond à cette perturbation, du circuit considéré d'identification d'erreurs (V dans CPx) déclenche directement ou indirectement
    - aussi bien la déconnexion du processeur considéré (CPx) du système de bus (B:CMY0/B:CMY1) au moyen d'interrupteurs de séparation ou au moyen d'un module I/O correspondant à de tels interrupteurs de séparation,
    - que le démarrage de la lecture de la section de programme de diagnostic d'erreurs mémorisée pour une telle perturbation dans la partie ROM proprement dite de la mémoire locale (LMY), et
* ensuite, les deux modules (PU) de ce processeur séparé (CPx) déclenchent le traitement de cette section de programme de diagnostic d'erreurs pour localiser et/ou déterminer le type d'erreur.

2. Procédé suivant la revendication 1, caractérisé par le fait que
* ensuite, dans le cas où pendant l'exécution, aucune indication d'une erreur n'est établie, le processeur considéré (CPx) se raccorde de lui-même à nouveau au système de bus (B:CMY0/B:CMY1).

3. Procédé suivant la revendication 1, caractérisé par le fait que
* ensuite, dans le cas où pendant l'exécution, une indication d'une erreur est établie, un code d'erreur correspondant à cette erreur,
- par exemple l'adresse de l'ordre considéré de la section de programme de diagnostic d'erreur,
est mémorisé dans un registre de diagnostic particulier (REG) du processeur considéré (CPx).

4. Procédé suivant la revendication 3, caractérisé par le fait que
* après la mémorisation du code d'erreur, l'exécution de la section du programme de diagnostic est interrompue.

5. Procédé suivant la revendication 3 ou 4, caractérisé par le fait que
- le processeur considéré (CPx) reste ensuite déconnecté.

6. Procédé suivant l'une des revendications 2 à 5, caractérisé par le fait que
* un processeur particulier,
- par exemple un processeur spécial d'un poste opération & maintenance,
a accès, par l'intermédiaire du système de bus (B:CMY0/B:CMY1), au moyen d'un code particulier, à chaque processeur (CPx) déconnecté du système de bus (B:CMY0/B:CMY1), par exemple pour interroger le contenu de ce registre de diagnostic (REG).

7. Procédé suivant la revendication 1, 3, 4 ou 6, caractérisé par le fait
* lorsque, grâce à un circuit d'identification d'erreurs associé directement à l'un des deux modules (PU) du processeur,
- par exemple grâce à un circuit EDC ou un réseau à bits de parité,
seule une indication du caractère défectueux de l'un des deux modules (PU) du processeur est établie, le module considéré (PU) du processeur est déconnecté seul, et
* le fonctionnement normal du processeur est maintenu uniquement par l'autre module (PU) de ce processeur.

8. Procédé suivant la revendication 7, caractérisé par le fait que
* une indication de cette déconnexion d'un module (PU) du processeur est enregistrée pour le service de maintenance, par exemple dans le registre de diagnostic (REG).